# FASCICULE DE BREVET EUROPEEN

(11) **EP 2 203 280 B1**
(45) Date de publication et mention de la délivrance du brevet: **18.05.2011**
(21) Numéro de dépôt: 08839700.5
(22) Date de dépôt: 25.09.2008
(51) Int. Cl.: B25J 9/02, B25J 9/10, B25J 18/02, B25J 5/06, B25J 18/00, B65G 65/02

(54) **ROBOT MANIPULATEUR POUR PALETTISEUR**
HANDHABUNGSROBOTER FÜR EINE PALETTIERVORRICHTUNG
HANDLING ROBOT FOR PALLETIZER

(30) Priorité: 28.09.2007 FR 0706788
(43) Date de publication de la demande: 07.07.2010
(73) Titulaire: Sidel Participations, 76930 Octeville Sur Mer (FR)
(72) Inventeur: BONHOMME, Eric, F-76930 Octeville-sur-Mer (FR)
(74) Mandataire: Cabinet Plasseraud
(86) Numéro de dépôt international: PCT/FR2008/051714
(87) Numéro de publication internationale: WO 2009/050376

(56) Documents cités:
- FR-A- 1 367 849
- FR-A- 2 640 607
- JP-A- 3 241 121
- US-A- 5 465 854

## Description

La présente invention concerne les installations de palettisation et, plus particulièrement, un perfectionnement au robot manipulateur qui s'empare des produits amenés par un dispositif convoyeur pour les ranger sur une palette.

Ce genre d'installation de palettisation, ou palettiseur, comprend une structure qui fait office de châssis pour porter le robot manipulateur, lequel robot, du type trois ou quatre axes, est constitué - d'un pont qui se déplace sur des rails disposés à la partie supérieure dudit châssis, - d'un mât vertical qui est porté et guidé par ledit pont et, à l'extrémité dudit mât, - d'une tête de préhension munie d'un équipement approprié pour saisir les produits à palettiser.

La tête de préhension peut être pivotante, munie du quatrième axe, et être équipée de ventouses pour s'emparer des produits sur le convoyeur d'amenée et les ranger ensuite, avec la bonne orientation, sur la palette.

Ce type d'installation est soumis à de multiples contraintes dont, en premier lieu, des contraintes liées à la sécurité et au confort du personnel opérateur, mais aussi des contraintes liées, d'une part, aux cadences et à la nature des produits: poids, encombrement, et liées, d'autre part, aux problèmes d'implantation de ce type de matériel qui doit pouvoir se loger dans des bâtiments existants dont la hauteur sous plafond peut être très faible.

Il existe depuis longtemps des palettiseurs robotisés et ce problème de place pour loger le robot a déjà été évoqué et solutionné comme décrit, par exemple, dans le document FR2642059.

La présente invention propose un robot manipulateur pour un palettiseur, qui permet de répondre à ce type de contrainte d'implantation et de place.

Elle permet aussi de répondre aux autres contraintes liées à l'environnement, avec une diminution des nuisances sonores, et liées à la sécurité du fonctionnement avec, en particulier, un contrôle original des mouvements de la tête de préhension qui offre une sécurité face aux risques de chutes.

Le robot manipulateur selon l'invention propose également, comme décrit dans le document précité, l'utilisation d'un mât télescopique de manipulation de caisses en vue de leur palettisation. Ce genre de mât télescopique est également décrit dans d'autres documents de l'état de la technique comme, par exemple, les documents JP03241121 et US5465854; ces deux documents montrent, respectivement, un mât télescopique de manipulation d'un godet de pelleteuse et un mât télescopique pour la manipulation d'un instrument de contrôle et d'inspection d'objets divers.

Le robot manipulateur selon l'invention, du type trois ou quatre axes, pour un palettiseur, est défini dans la revendication 1 et comprend : - un pont guidé transversalement, par rapport au sens d'arrivée des produits, sur des poutres situées à la partie supérieure du châssis dudit palettiseur et - un mât vertical télescopique constitué, d'une part, d'un socle fixe verticalement qui permet de limiter l'encombrement en hauteur dudit palettiseur, lequel socle fixe est porté et guidé longitudinalement sur ledit pont, et, d'autre part, de plusieurs tronçons dont le dernier, le tronçon central, porte la tête de préhension desdits produits à palettiser, lesquels tronçons sont manipulés par des roues, dont les diamètres sont adaptés à la course du tronçon auquel elles sont attachées au moyen d'organes de liaison indépendants, lesquelles roues sont montées sur un même arbre commun qui confère un mouvement d'extension gravitaire et un mouvement de rétraction motorisé, lesquels organes de liaison entre lesdits tronçons et lesdites roues étant constitués d'au moins une chaîne de transmission pour ledit dernier tronçon et de courroies pour les autres tronçons, lesquelles courroies s'enroulant sur leur roue respective.

Cet aménagement, avec une chaîne qui permet d'établir une liaison sérieuse entre la charge et l'arbre moteur et avec des courroies qui accompagnent le mouvement des autres tronçons, permet un fonctionnement en souplesse et, surtout, un fonctionnement particulièrement silencieux du robot.

Toujours selon l'invention, le dernier tronçon du mât est associé à deux chaînes de transmission coopérant chacune avec une roue dentée, lesquelles roues sont placées côte à côte sur l'arbre moteur, et l'une des chaînes fait office de chaîne principale pour assurer l'entraînement normal de ce dernier tronçon alors que l'autre chaîne est simplement maintenue en tension et fait office d'organe de retenue et de sécurité en cas de rupture de ladite chaîne principale.

Selon une autre disposition de l'invention, les moyens de mise en tension de la deuxième chaîne sont constitués d'un organe élastique interposé entre un appui situé à la partie supérieure du dernier tronçon et une butée, laquelle butée est disposée à l'extrémité inférieure d'une tige qui prolonge la chaîne et qui traverse un orifice dudit appui qui lui sert de guide.

Toujours selon l'invention, les chaînés de manoeuvre du dernier tronçon s'étendent de part et d'autre de leur roue dentée d'engrènement entre la partie supérieure dudit dernier tronçon et un magasin qui accueille et stocke leur brin libre, lequel magasin se présente sous la forme d'un bloc muni, sur chacune de ses faces, d'une rainure curviligne en forme de colimaçon dans laquelle se loge ledit brin libre correspondant, lesquelles rainures sont taillées sur les faces latérales dudit bloc.

Selon une autre disposition de l'invention, le bloc faisant office de magasin pour les brins libres des deux chaînes est réalisé en matériau thermoplastique et se présente sous la forme d'un L basculé, lequel bloc enveloppe partiellement la partie supérieure de chaque roue dentée, faisant office de guide pour lesdites chaînes, sur environ une moitié de la périphérie desdites roues dentées.

Toujours selon l'invention, le robot comporte, associé à l'une des roues dentées, un dispositif de sécurité comprenant un verrou qui est manoeuvré au moyen d'un vérin mécanique, alimenté en air sous pression pour maintenir ledit crochet en position inactive et fonctionnant avec un ressort pour mettre ce même crochet en position active, en cas de besoin, lors d'une intervention sur la machine par un opérateur, par exemple.

Mais l'invention sera encore détaillée à l'aide de la description suivante et des dessins annexés, donnés à titre indicatif, et dans lesquels:
- la figure 1 est une élévation schématique d'une installation de palettisation qui comporte un robot selon l'invention dont le mât est représenté dans deux positions: d'une part, il est représenté avec des traits forts en position rétractée et, d'autre part, il est représenté avec des traits mixtes fins en position d'extension totale,
- la figure 2 est une coupe schématique horizontale agrandie, selon 2-2, du mât qui apparaît en traits forts sur la figure 1,
- la figure 3 est une vue partielle schématique agrandie en coupe verticale, selon 3-3, du mât qui apparaît en traits forts sur la figure 1,
- la figure 4 est une vue schématique partielle en coupe verticale, selon 4-4, de la figure 3,
- la figure 5 est une section agrandie, selon 5-5 de la figure 4, montrant le magasin, en forme de bloc, qui assure le guidage des brins libres des deux chaînes de transmission associées au dernier tronçon du mât,
- la figure 6 est une vue schématique plus détaillée du système de sécurité permettant le verrouillage des roues dentées et crantées qui manoeuvrent les tronçons.

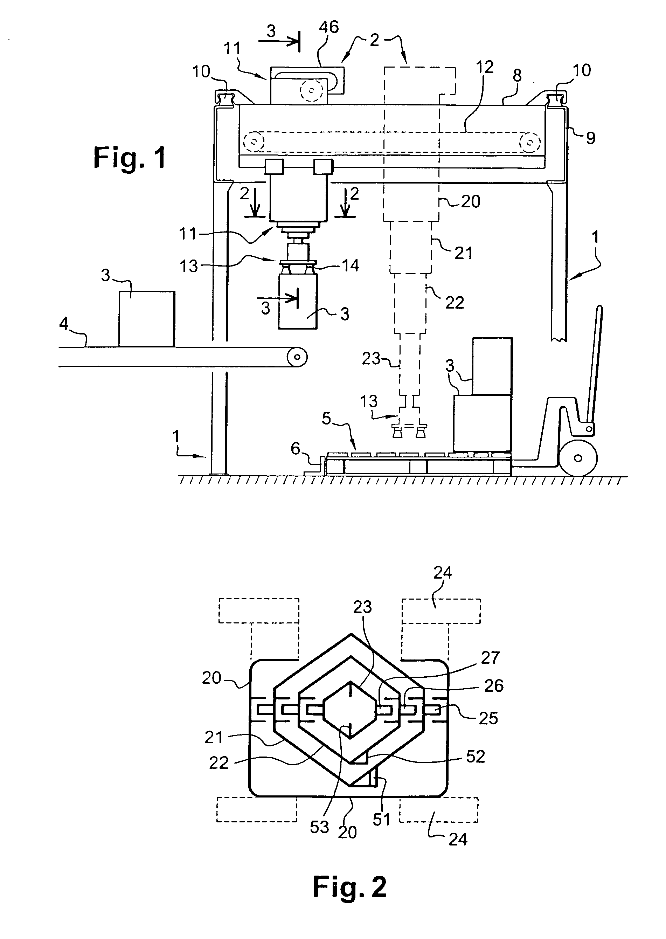

L'installation de palettisation représentée figure 1 comprend une structure de forme parallélépipédique qui constitue le châssis (1) de ce que l'on nomme plus simplement un palettiseur.

Ce châssis (1) forme une sorte de portique qui est aménagé pour accueillir un robot (2) de manipulation du type trois ou quatre axes, lequel robot (2) prend en charge des produits (3) qui sont amenés par un convoyeur (4) et il les range sur une palette (5) qui est positionnée dans un référentiel (6) de l'installation.

Le robot (2) est constitué - d'un pont (8) roulant qui se déplace, sous l'effet de moyens moteurs appropriés, sur les poutres (9) supérieures du châssis (1), guidé au moyen de glissières (10) et - d'un mât (11) vertical qui est porté et guidé par ledit pont (8) pour se déplacer sous l'effet de moyens appropriés, du genre courroie (12) motorisée.

Le pont (8) se déplace dans un sens qui est transversal par rapport au sens d'arrivée des produits (3); le mât (11) se déplace longitudinalement, dans un sens qui est parallèle à celui de l'arrivée desdits produits.

Le mât (11) comporte la tête (13) qui est aménagée pour permettre la préhension des produits (3) et cette tête peut être pivotante, autour d'un axe vertical, pour ordonner lesdits produits selon le sens adapté à leur position de rangement sur la palette (5), ledit axe de pivotement constituant le quatrième axe du robot (2).

La tête (13) est, par exemple, munie d'un équipement de préhension qui est constitué de plusieurs ventouses (14) fonctionnant par dépression.

Les mouvements de la tête (13) dans le sens transversal et dans le sens longitudinal découlent respectivement des mouvements du pont (8) par rapport au châssis (1) et du mât (11) par rapport audit pont (8).

Le mouvement vertical de la tête (13) est assuré par le mât (11) qui, dans le cadre de l'invention, est du type télescopique. Ce mât (11) est en effet constitué - d'un socle (20), dont la position, dans le sens vertical, est fixe, et, comme représentés en traits mixtes fins sur la figure 1, - de plusieurs tronçons (21 à 23) qui s'étendent vers le bas, sous ledit socle.

Le socle (20) déborde légèrement en saillie au-dessus du châssis (1) et c'est lui, compte-tenu du fait qu'il est immobile verticalement, qui établit l'encombrement maximum, en hauteur, de l'installation, lequel encombrement est pratiquement limité à la hauteur du châssis (1); il permet une implantation facile du palettiseur dans des bâtiments existants.

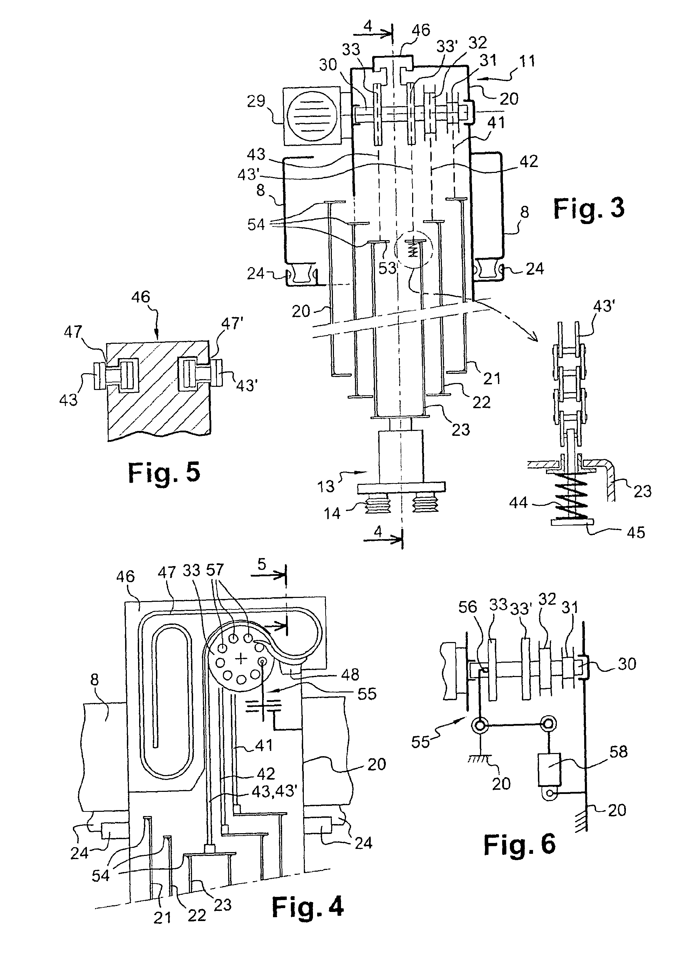

Ce socle (20) est guidé longitudinalement sur le pont (8) au moyen de glissières (24), repérées figure 3.

Selon le mode de réalisation détaillé sur les dessins, le mât télescopique (11) est constitué du socle (20) sur lequel est guidé un premier tronçon (21); ce tronçon (21) assure le guidage d'un second tronçon (22) et ce tronçon (22) assure le guidage du dernier tronçon (23) qui est au centre et qui porte la tête (13) de préhension des produits (3) dont il était question auparavant. Les tronçons (21) et (22) font la jonction entre le socle (20) et le dernier tronçon (23); l'ensemble permet de disposer d'une course verticale intéressante pour la tête (13) de préhension.

Tous ces tronçons (21 à 23) se déplacent verticalement, sous le socle (20), dans l'enceinte du palettiseur; ils se déplacent de haut en bas par simple gravité mais avec un mouvement contrôlé et le déplacement inverse de bas en haut est provoqué par des moyens moteurs.

Ces différents mouvements de montée-descente de chaque tronçon sont synchronisés et ils sont contrôlés en vitesse et en accélération par moteur, comme détaillé plus loin.

La figure 2 montre, schématiquement et en coupe horizontale, les différents éléments constituant le mât (11). En partant du socle (20), on trouve successivement:
- le premier tronçon (21) intermédiaire, qui est guidé verticalement par rapport audit socle au moyen d'un jeu de glissières (25) disposées dans un plan vertical orienté longitudinalement,
- le second tronçon (22) intermédiaire qui est guidé de la même façon au moyen d'un jeu de glissières (26) disposées dans le même plan vertical,
- le dernier tronçon (23) qui est également guidé par un jeu de glissières (27) disposées dans ledit plan vertical.

Ces différents tronçons (21 à 23) sont mobiles verticalement tous ensemble et leurs mouvements sont synchronisés par des moyens détaillés ci-après. En fait, contrairement à ce qui se pratique, les tronçons ne s'entraînent pas les uns les autres au moyen de butées de fin de course.

On remarque également que la tête (13) de préhension se situe elle aussi dans le même plan vertical que les glissières (25, 26 et 27) des différents tronçons (21, 22 et 23) respectivement. Cette disposition permet de concentrer les efforts de levage sur l'axe central du mât et d'éviter les problèmes de frottement et de coincement dus à un porte-à-faux de la charge qui est en bout du dernier tronçon (23) central.

Les mouvements synchronisés des tronçons (21 à 23) permettent de bénéficier d'un déplacement de la tête (13) sans chocs et sans à-coups, ce qui supprime également les nuisances sonores de ce type de matériel.

Chaque tronçon (21 à 23) est relié à un organe moteur (29) qui est commun pour l'ensemble desdits tronçons et cette liaison s'effectue par l'intermédiaire de roues qui sont portées par un arbre (30) unique qui est l'arbre dudit moteur (29) et par des organes de transmission du genre chaînes et courroies, comme représentées figure 3.

Sur cette figure 3, on retrouve le socle (20) qui est porté et guidé par le pont (8) au moyen des glissières (24) et ce socle (20) est traversé par l'arbre (30) de l'organe moteur (29).

Cet arbre (30) est disposé transversalement par rapport au pont (8) et il comporte plusieurs roues:
- une première roue (31) qui est reliée au premier tronçon (21) intermédiaire par une courroie (41),
- une deuxième roue (32) qui est reliée au deuxième tronçon (22) intermédiaire par une courroie (42) également,
- une troisième et une quatrième roue (33), (33') respectivement, qui sont identiques et qui sont reliées au dernier tronçon (23) par des chaînes de transmission (43) et (43') respectivement.

Les diamètres des différentes roues (31 à 33 et 33') sont adaptés à la course verticale de leurs tronçons respectifs. En gros, le diamètre des roues (33, 33') est de l'ordre de trois fois celui de la première roue (31) et celui de la deuxième roue (32) de l'ordre de deux fois celui de ladite première roue (31).

Les courroies (41) et (42) sont des courroies dentées dont les extrémités sont ancrées, d'une part, sur les roues (31) et (32) et, d'autre part, sur les tronçons (21) et (22) respectivement; elles sont stockées sur leur roue respective, c'est-à-dire qu'elles s'enroulent, ou se déroulent, sur la roue en question selon le mouvement desdits tronçons.

Ces courroies (41) et (42) sont ancrées au niveau des tronçons (21) et (22) au moyen de pattes (51), (52) respectivement, lesquelles pattes de fixation sont disposées légèrement en déport, décalées les unes par rapport aux autres, comme représentées figure 2.

Les roues (33) et (33') sont des roues dentées d'engrènement qui coopèrent avec des chaînes (43), (43') respectivement, du type chaînes de transmission.

La chaîne (43) est fixée à la partie supérieure du tronçon (23) au niveau d'une patte (53), laquelle patte se situe dans un plan médian transversal qui est perpendiculaire au plan des différentes glissières (25 à 27).

La roue (33) et sa chaîne (43) réalisent l'entrainement principal du dernier tronçon (23).

La roue (33') et sa chaîne (43') correspondante constituent un équipement de sécurité pour prévenir un risque de casse au niveau de l'autre chaîne (43). La chaîne (43') est simplement maintenue sous tension au moyen d'un organe élastique (44) comme représenté de façon plus détaillée à part; elle ne participe pas directement et en permanence à la manoeuvre du dernier tronçon (23).

L'organe élastique (44) est interposé entre un appui situé à la partie supérieure du dernier tronçon (23) et une butée (45), laquelle butée (45) se situe à l'extrémité inférieure d'une tige qui se situe à l'extrémité de la chaîne (43') et qui prolonge cette dernière en traversant un orifice dudit appui, lequel appui lui servant de guide.

Des butées (54), purement mécaniques, situées à la partie supérieure de chaque tronçon mobile, établissent une limite au mouvement de ces différents tronçons mobiles, en cas de nécessité.

Les chaînes (43) et (43') s'étendent de part et d'autre de leurs roues (33) et (33') respectives, d'un côté jusqu'au tronçon (23) et de l'autre, elles sont libres et le brin correspondant est stocké dans un magasin (46).

Ce magasin (46) se présente sous la forme d'un bloc réalisé en matériau thermoplastique. Il comporte, sur chaque face latérale, une rainure (47), (47'), qui accueille les brins libres des chaînes (43) et (43') respectivement, déterminant un chemin curviligne pour chacun d'eux, en forme de colimaçon.

Ces rainures (47) et (47') sont taillées en creux dans le bloc constituant le magasin (46) et elles ont une forme en Té, comme représentées figure 5. Cette forme en Té permet de faire glisser chaque chaîne (43), (43'), sur ses propres rouleaux, et de la maintenir centrée sur toute la longueur des rainures (47), (47'), respectivement.

De plus, la nature du matériau utilisé, un matériau thermoplastique du genre polyéthylène, favorise le glissement et évite les incidents d'engrènement à l'entrée des roues dentées (33) et (33') qui peuvent être la conséquence de phénomènes de grippage au niveau des maillons des chaînes (43), (43').

Le bloc constituant le magasin (46) est disposé perpendiculairement à l'arbre (29), entre les roues (33) et (33'). Ce magasin (46) se présente sous la forme d'un L retourné coiffant les roues (33) et (33') et il enveloppe une partie de leur périphérie.

Les deux chaînes (43) et (43') sont enroulées sur la partie supérieure de la périphérie des roues (33) et (33'), respectivement; elles sont enveloppées et guidées au moyen du magasin (46).

A la sortie de chaque roue dentée (33) et (33'), la chaîne (43), (43') correspondante est dirigée vers l'entrée de la rainure (47), (47'), respectivement, du magasin (46) au moyen d'un guide (48). Un seul guide (48) apparaît sur les dessins et en particulier sur la figure 4.

Ce guide (48) aide la chaîne correspondante à quitter la roue dentée; il accompagne et oriente le flanc externe de la chaîne (43) vers l'entrée du magasin (46) lors du relevage du tronçon (23) et il l'accompagne pour s'engrener lors du mouvement inverse.

Chaque chaîne (43), (43'), suit un chemin curviligne en colimaçon qui comprend tout d'abord une boucle aménagée d'un côté du bloc, laquelle boucle est suivie d'un chemin rectiligne qui passe au-dessus de la roue (33), (33'), correspondante, avant de former, de l'autre côté dudit bloc, une grande boucle verticale dont la hauteur est de l'ordre du quart de la course du tronçon extrême.

La figure 6 montre le détail d'un dispositif de sécurité qui fonctionne en cas d'urgence pour verrouiller quasi instantanément les différents tronçons du mât (11) et surtout la tête (13) de préhension des produits (3).

Ce dispositif de sécurité comprend un verrou (55) qui coopère avec l'une des roues pour stopper l'arbre (30) et toutes les autres roues. Sur le mode de réalisation présenté, le verrou (55) est en forme de crochet (56) et il coopère avec des crans (57) aménages sur la roue dentée (33), lesquels crans (57) sont en forme d'orifices régulièrement répartis sur une circonférence située sous la denture de ladite roue, comme visible figure 4.

Le crochet (56) est mis en oeuvre automatiquement par un vérin (58). Ce vérin, du type pneumatique, maintient le crochet (56) en position inactive lorsqu'il est soumis à l'application d'une pression pneumatique, par exemple, et il tend à se mettre automatiquement en position active, en cas de manque de pression, sous l'effet d'un organe élastique du genre ressort intégré.

Le crochet (56) peut être mis en oeuvre directement par l'opérateur lorsqu'il est, par exemple, amené à faire des interventions sur la machine. Il peut aussi être mis en oeuvre automatiquement, en cas d'incident au niveau de la tête (13) de préhension comme, par exemple, un incident au niveau de l'alimentation des ventouses (14) qui porte le produit (3).

## Revendications

1. Robot manipulateur du type trois ou quatre axes pour palettiseur, comprenant :
- un pont (8) guidé sur des poutres (9) situées à la partie supérieure du châssis (1) dudit palettiseur et
- un mât (11) vertical télescopique constitué, d'une part, d'un socle (20) fixe verticalement, porté et guidé sur ledit pont (8), et, d'autre part, de plusieurs tronçons (21, 22, 23) dont le dernier, le tronçon (23) central, porte une tête (13) de préhension des produits à palettiser, lesquels tronçons (21, 22, 23) étant solidaires de roues (31, 32, 33), de diamètres différents, lesquels diamètres desdites roues étant adaptés à la course du tronçon auquel ces dites roues sont attachées, respectivement, au moyen d'organes de liaison indépendants,
lesdites roues (31 à 33) étant montées sur un même arbre (30) commun qui confère un mouvement d'extension gravitaire et un mouvement de rétraction motorisé, lesquels organes de liaison entre lesdits tronçons (21, 22, 23) et lesdites roues (31, 32, 33) étant constitués d'au moins une chaîne (43) de transmission pour ledit dernier tronçon (23) et de courroies (41, 42) pour les autres tronçons (21, 22) respectivement, lesquelles courroies s'enroulant sur leur roue respective.

2. Robot manipulateur selon la revendication 1, **caractérisé en ce que** le dernier tronçon (23) du mât est associé à deux chaînes (43, 43') de transmission coopérant chacune avec une roue (33, 33') dentée, respectivement, lesquelles roues dentées sont placées côte à côte sur l'arbre (30) moteur et l'une fait office de chaîne (43) principale pour assurer l'entraînement normal de ce dernier tronçon, alors que l'autre chaîne (43') est simplement maintenue en tension et fait office d'organe de retenue et de sécurité en cas de rupture de ladite chaîne (43) principale.

3. Robot manipulateur selon la revendication 2, **caractérisé en ce que** les moyens de mise en tension de la deuxième chaîne (43') sont constitués d'un organe (44) élastique interposé entre un appui situé à la partie supérieure du dernier tronçon (23) et une butée (45), laquelle butée (45) est disposée à l'extrémité inférieure d'une tige qui prolonge ladite deuxième chaîne (43') et qui traverse un orifice dudit appui, lui servant de guide.

4. Robot manipulateur selon la revendication 3, **caractérisé en ce que** les chaînes (43, 43') de manoeuvre du dernier tronçon (23) s'étendent de part et d'autre de leur roue (33, 33') dentée d'engrènement, respectivement, entre la partie supérieure dudit dernier tronçon (23) et un magasin (46) qui accueille et stocke leur brin libre, lequel magasin (46) se présente sous la forme d'un bloc muni de rainures curvilignes en forme de colimaçon dans lesquelles se logent lesdits brins libres.

5. Robot manipulateur selon la revendication 4, **caractérisé en ce qu'**il comporte des rainures (47 et 47') pour loger respectivement les chaînes (43, 43') respectivement, lesquelles rainures sont taillées sur les faces latérales du bloc qui constitue ledit magasin (46).

6. Robot manipulateur selon la revendication 5, **caractérisé en ce que** le bloc faisant office de magasin (46) pour les brins libres des deux chaînes (43, 43') est réalisé en matériau thermoplastique et se présente sous la forme d'un L basculé, lequel bloc enveloppe partiellement la partie supérieure de chaque roue (33, 33') dentée, faisant office de guide sur environ une moitié de leur périphérie.

7. Robot manipulateur selon la revendication 2, **caractérisé en ce qu'**il comporte, associé à l'une des roues dentées, la roue (33), par exemple, un dispositif de sécurité comprenant un verrou (55) en forme de crochet (56), lequel verrou (55) est manoeuvré au moyen d'un vérin (58) du type mécanique, alimenté en air sous pression pour maintenir ledit crochet (56) en position inactive et fonctionnant avec un ressort pour mettre ce même crochet (56) en position active de verrouillage de la roue, en cas de besoin, notamment lors d'une intervention sur la machine par un opérateur.

## Claims

1. Handling robot of the three or four axis type for a palletizer, comprising:
- a platform (8) guided on beams (9) situated in the upper part of the framework (1) of said palletizer, and
- a telescoping vertical mast (11) consisting, on the one hand, of a vertically fixed base (20), supported and guided on said platform (8), and, on the other hand, of several sections (21, 22, 23) of which the last, or central, section (23) supports a head (13) for gripping products to be palletized, said sections (21, 22, 23) being connected to wheels (31, 32, 33) of different diameters, said diameters of said wheels being adapted to the travel distance of the section to which these respective wheels are attached by means of independent connection members,
said wheels (31 to 33) being mounted on the same common shaft (30) which provides gravitational extension movement and powered retraction movement, said connection members between said sections (21, 22, 23) and said wheels (31, 32, 33) consisting of at least one transmission chain (43) for said last section (23) and respective belts (41, 42) for the other sections (21, 22), said belts winding around their respective wheel.

2. Handling robot according to claim 1, **characterized in that** the last section (23) of the mast is associated with two transmission chains (43, 43') each cooperating with a respective sprocket wheel (33, 33'), said sprocket wheels are placed side by side on the drive shaft (30) and one of the chains acting as the primary chain for ensuring normal movement of the last section while tension is simply maintained in the other chain (43') which serves as a retaining and safety device in case of breakage of said primary chain (43).

3. Handling robot according to claim 2, **characterized in that** the tensioning means for the second chain (43') comprises an elastic member (44) placed between a support located on the upper part of the last section (23) and a stop (45), said stop (45) being arranged at the lower extremity of a rod that extends said second chain (43') and passes through an opening in said support which serves as a guide for it.

4. Handling robot according to claim 3, **characterized in that** the chains (43, 43') for maneuvering the last section (32) extend on both sides from their respective sprocket wheel (33, 33'), between the upper part of said last section (23) and a housing (46) which accepts and stores their free strand, said housing (46) being in the form of a block equipped with curved helical grooves which accept said free strands.

5. Handling robot according to claim 4, **characterized in that** it comprises grooves (47 and 47') which respectively accept the chains (43, 43'), said grooves being cut into the lateral faces of the block which constitutes said housing.

6. Handling robot according to claim 5, **characterized in that** the block acting as a housing (46) for the free strands of the two chains (43, 43') is realized of thermoplastic material and is present in the form of a rotated L, said block partially covering the upper part of each sprocket wheel (33, 33'), serving as a guide for about half of their circumference.

7. Handling robot according to claim 2, **characterized in that** it comprises, in association with one of the sprocket wheels, the wheel (33) for example, a safety device comprising a latch (55) in the form of a hook (56), said latch (55) being maneuvered by means of a mechanical actuator (58), supplied with compressed air to maintain said hook (56) in the inactive position and operating with a spring to place said hook (56) in the active position of locking the wheel in case of need, in particular during operator intervention on the machine.

## Patentansprüche

1. Handhabungsroboter mit drei oder vier Achsen für eine Palettiervorrichtung, aufweisend:
- eine auf Trägern (9) geführte Brücke (8), die im oberen Abschnitt des Rahmens (1) der Palettiervorrichtung angeordnet ist und
- einen vertikalen Teleskopmast, der zu einem Teil aus einem vertikal fixierten Grundgestell (20), das auf der Brücke (8) getragen und geführt wird, besteht und zum anderen Teil aus einer Vielzahl von Teilabschnitten (21, 22, 23), deren letzter, der zentrale Teilabschnitt (23), einen Aufnahmekopf (13) für die zu palettierenden Produkte trägt, wobei die Teilabschnitte (21, 22, 23) mit Zahnrädern unterschiedlichen Durchmessers zusammenhängen, wobei die Durchmesser der Zahnräder jeweils an den Hub des Teilabschnitts angepasst sind, mit dem die Zahnräder über einzelne Kopplungselemente verbunden sind,
wobei die Zahnräder (31 bis 33) auf einer gemeinsamen Welle (30) montiert sind, die eine schwerkraftverursachte Verlängerungsbewegung und eine motorbetriebene Verkürzungsbewegung ausübt, und die Kopplungselemente zwischen den Teilabschnitten (21, 22, 23) und den Zahnrädern (31, 32, 33) aus mindestens einer Antriebskette (43) für den letzten Teilabschnitt (23) und jeweils Riemen (41, 42) für die anderen Teilabschnitte (21, 22) bestehen, die Riemen über ihr jeweiliges Zahnrad laufend.

2. Handhabungsroboter gemäß Anspruch 1, **dadurch gekennzeichnet, dass** der letzte Teilabschnitt (23) des Masts mit zwei Antriebsketten (43, 43') angeschlossen ist, die jeweils mit einem Zahnrad (33, 33') zusammenwirken, wobei die Zahnräder Seite an Seite auf der Motorwelle (30) angeordnet sind und eine als Hauptkette (43) zum Sichern des normalen Antriebs des letzten Teilelements dient, während die andere Kette (43') einfach unter Zug gehalten wird und als Rückhalte- und Sicherheitselement im Fall des Reißens der Hauptkette (43) dient.

3. Handhabungsroboter gemäß Anspruch 2, **dadurch gekennzeichnet, dass** die Mittel zur Spannungsaufbringung der zweiten Kette (43') durch ein elastisches Element (44), das zwischen einem in dem oberen Teil des letzten Teilabschnitts (23) angeordneten Auflager und einem Anschlag (45) eingefügt ist, gebildet werden, wobei der Anschlag (45) an dem unteren Ende eines Stabs angeordnet ist, der die zweite Kette (43') verlängert und der durch eine Öffnung des Auflagers hindurchgeht, die ihm als Führung dient.

4. Handhabungsroboter gemäß Anspruch 3, **dadurch gekennzeichnet, dass** die Ketten (43, 43') zur Betätigung des letzten Teilabschnitts (23) sich jeweils von ihrem Zahnrad (33, 33') auf beiden Seiten erstrecken und zwar zwischen dem oberen Teil des letzten Teilabschnitts (23) und einem Magazin (46), das ihren freien Strang aufnimmt und lagert, wobei das Magazin (46) als Block, ausgestattet mit bogenschneckenförmigen Nuten, in denen der freie Strang aufgenommen ist, ausgebildet ist.

5. Handhabungsroboter gemäß Anspruch 4, **dadurch gekennzeichnet, dass** er Nuten (47, 47') zum Aufnehmen der jeweiligen Ketten (43, 43') aufweist, wobei die Nuten in die seitlichen Flächen des Blocks, der das Magazin (46) bildet, eingebracht sind.

6. Handhabungsroboter gemäß Anspruch 5, **dadurch gekennzeichnet, dass** der Block, der als Magazin (46) für die freien Stränge der zwei Ketten (43, 43') dient, aus thermoplastischem Material hergestellt und als gekippte L-Form ausgebildet ist, wobei der Block teilweise den oberen Teil eines jeden Zahnrads (33, 33') umschließt, in etwa über die Hälfte seines Umfangs als Führung dienend.

7. Handhabungsroboter gemäß Anspruch 2, **dadurch gekennzeichnet, dass** er aufweist, eine an eines der Zahnräder, zum Beispiel an das Zahnrad (33), angeschlossene Sicherheitsvorrichtung, die einen Riegel (55) in Form eines Hakens (56) aufweist, wobei der Riegel (55) über einen mechanischen Hubzylinder (58) betätigt wird, der mit Druckluft versorgt wird, um den Haken in einer deaktivierten Position zu halten und die mit einer Feder arbeitet, um den Haken (56), wenn erforderlich, in eine aktive Verriegelungsposition mit dem Zahnrad zu bringen, insbesondere bei einem Eingriff eines Bedieners in die Maschine.
